## Europäisches Patentamt
## European Patent Office
## Office européen des brevets

(11) Publication number: **0 119 195**
**B1**

## (12) EUROPEAN PATENT SPECIFICATION

(45) Date of publication of patent specification: **05.04.89**

(51) Int. Cl.⁴: **G 01 F 1/32**

(21) Application number: **82903104.6**

(22) Date of filing: **16.09.82**

(86) International application number:
**PCT/US82/01265**

(87) International publication number:
**WO 84/01215 29.03.84 Gazette 84/09**

(60) Divisional application 88102530 filed on 22.02.88.

(54) **VORTEX FLOW METER.**

(43) Date of publication of application:
**26.09.84 Bulletin 84/39**

(45) Publication of the grant of the patent:
**05.04.89 Bulletin 89/14**

(84) Designated Contracting States:
**DE FR GB**

(56) References cited:
**US-A-3 742 503**
**US-A-3 906 792**
**US-A-3 937 195**
**US-A-4 003 253**
**US-A-4 062 238**
**US-A-4 116 060**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **JOY, Robert, D.**
**Route 4, Box 817**
**Cedar Rapids, IA 52401 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

The invention relates to a device for generating vortices in a bonded fluid stream.

It is known to position a generator plate in an air flow to generate Karman vortices. Detection of the frequency of these vortices can be used as an indication of the mass of air flowing by the generator plate. For example, U.S. Patent 4,312,237 issued January 26, 1982 discloses various embodiments of narrow, elongated generator plates used for the generation of Karman vortices in a fluid stream. In one embodiment of the 4,312,237 patent, a generator plate has a shedding section wherein an aperture intersects side surfaces of the generator plate to form a leading aperture edge which services as a shedding corner for the generation of vortices.

Also U.S. Patent 4,312,236, issued January 26, 1982 discloses a vortex generating device having a narrow generator plate which is immersed in a fluid flow to generate Karman vortices. The generator plate has side surfaces parallel to the direction of fluid flow. The side surfaces have a shedding region therein forming shedding corners at which vortices detach from the generator plate.

Air flow meters using such vortex generators have produced stable vortices over a wide range of fluid flow rates. Such devices have functioned particularly well and operated in accordance with the acoustic techniques disclosed in U.S. Patent 3,680,375 to Joy et al.

U.S.—A—4,003,253 relates to a replaceable adapter for vortex-shedding flowmeter provided with a flow tube forming a cylindrical passage through which the fluid to be metered is conducted. The tube has a mounting flange at the inlet thereof and an obstacle assembly mounted within the tube to create vortices. The adapter comprises a pair of rods disposed longitudinally in said tube to restrict the effective area of the passage, the rods being cantilevered from a support flange lying against said mounting flange.

US—A—4,116,060 relates to a massflow sensor comprising a conduit for carrying mass fluid flow to be sensed, a bluff body disposed in said conduit for producing periodic vortices in the mass flow that are at a frequency which is indicative of the mass flow and means for sensing said frequency, density compensation is a part of the step of producing the desired periodic vortices and is accomplished by varying the characteristic dimension of the bluff body and/or cross sectional flow area in relation to the density of mass flow.

However, there has been a problem of adjusting the vortex frequency to a precise value at a given flow for flow meters that do not have precise mechanical dimensions.

The vortex flowmeter has the characteristic of having a quasi-digital output where each output pulse represents the passage of a certain amount of fluid. This amount of fluid is determined by the flow duct area and the cross section width of the vortex generator. This relationship is defined by:

$$f = \frac{SQ}{dA} \qquad \text{Equation 1}$$

where
f is the vortex frequency
S is the Strouhal constant
Q is the volumetric flow rate
d is the vortex generator width and
A is the flow duct area.

In order to produce flowmeters having an identical vortex frequency to fluid flow relation, the mechanical duct area must be held to precise tolerances.

For some applications where tight tolerances cause a cost penalty, such as in the automative field, a means is needed to adjust some mechanical dimension to change the frequency-to-flow relation in order to offset manufacturing tolerance.

According to the present invention, there is provided a device for generating vortices in a bounded fluid stream, said device comprising fluid flow duct means (11, 12) for passing a fluid stream, generator means (13) for generating vortices positioned in said duct (11, 12) in the fluid stream and adjustment means for varying the cross sectional area of the fluid flow adjacent said generator means characterised in that said generator means includes an elongated plate member having an elliptical cross section area and rotatable about an axis perpendicular to the cross sectional area of the fluid flow.

The adjustment means for moving the elongated member comprises a sensor for generating a control signal for varying the cross sectional area of the fluid flow adjacent the plate member and an actuator coupled to the sensor and the plate member for moving the plate member as a function of the output of the sensor.

The invention will now be described further by way of example, with reference to the accompanying drawings, in which:

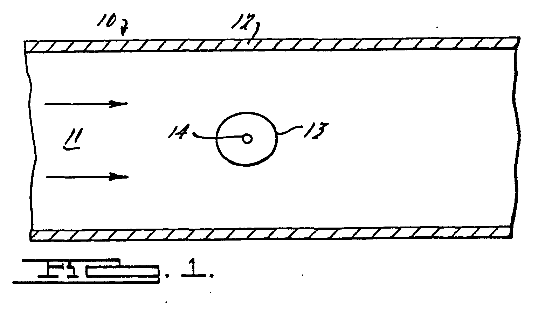

Figure 1 is a top view of an air flow meter in accordance with an embodiment of this invention including provisions for varying the vortex generator width.

Referring to Figure 1, an air flow meter 10 has an air flow channel 11 with walls 12. Positioned within air flow channel 11 is an elongated vortex generator or strut 13 having an elliptical cross section. The vortex strut 13 dimension that governs the shed frequency is the width of the strut, measured at right angles with respect to the flow. Vortex strut 13 can be rotated about an axis 14. This will cause the cross sectional area of strut 13 exposed to the air flow to change. The change in vortex frequency correlates very closely with the expect change based upon the projected width. Therefore, an elliptical strut with a ten percent difference in its major and minor axes will cause a total frequency change of ten percent when rotated through 90°.

The structures of Figure 1 show an apparatus for changing the output frequency of a vortex flow meter. Such a change is useful for compensating for variations in mechanical dimensions of the flow meters due to manufacturing tolerances. However, the apparatus may be used for different purposes. The mechanical motion causing a change in the vortex frequency may be a function of the output of pressure and/or temperature sensors to offset changes in gas density and hence cause the air flow meter to indicate mass flow rather than volumetric flow. Other methods could have the mechanical motion be a function of a process such as a programmed fuel enrichment and engine control systems, which could be applied during accelerating conditions and leaning of the fuel/air mixture during decelerating conditions.

Various modifications and variations will no doubt occur to those skilled in the various arts to which this invention as claimed pertains. A sensor can be used to actuate the rotation of vortex strut 13 about axis 14. That is, the vortex frequency can be adjusted either manually or as a function of a sensed parameter. These and all other variations which basically rely on the teachings through which this disclosure has advanced the art are properly considered within the scope of this invention.

This invention has various industrial applications including, but not limited to, the measurement of air flow coming into an internal combustion engine and providing a signal for use by electronic engine controls governing engine operation. In particular, the measurement of the air flow can be used to govern the air fuel ratio supplied to the internal combustion engine.

## Claims

1. A device for generating vortices in a bounded fluid stream, said device comprising fluid flow duct means (11, 12) for passing a fluid stream, generator means (13) for generating vortices positioned in said duct (11, 12) in the fluid stream and adjustment means for varying the cross sectional air of the fluid flow adjacent said generator means characterised in that said generator means includes an elongated plate member having an elliptical cross section area and rotatable about an axis (14) perpendicular to the cross sectional area of the fluid flow.

2. A device as claimed in Claim 1, wherein said adjustment means includes a sensor for generating a control signal for varying the cross sectional area of the fluid flow adjacent said plate member and an actuator coupled to said sensor and said elongated plate member for moving said plate member as a function of the output of said sensor.

## Patentansprüche

1. Vorrichtung zur Erzeugung von Wirbeln in einem festgelegten Medienstrom, wobei die genannte Vorrichtung Medienströmungskanalvorrichtungen (11, 12) zum Durchleiten eines Medienstroms, eine Erzeugervorrichtung (13) zur Erzeugung von Wirbeln, wobei die Anordnung im genannten Kanal (11, 12) im Medienstrom vorgesehen ist, und eine Einstellvorrichtung umfaßt, um die Querschnittsfläche des Medienstroms in der Nähe der genannten Erzeugervorrichtung variieren zu können, dadurch gekennzeichnet, daß die genannte Erzeugervorrichtung ein länglich ausgeführtes Blechelement mit einer elliptischen Querschnittsfläche umfaßt, das um eine Achse (14) senkrecht zur Querschnittsfläche des Medienstroms drehbar ist.

2. Vorrichtung gemäß Anspruch 1, wobei die genannte Einstellvorrichtung einen Sensor zur Erzeugung eines Steuersignals, um so die Querschnittsfläche des Medienstroms in der Nähe des genannten Blechelements variieren zu können, und ein Stellglied umfaßt, das mit dem genannten Sensor und dem genannten, länglich ausgeführten Blechelement gekoppelt ist, um das genannte Blechelement in Abhängigkeit vom Ausgangssignal des genannten Sensors bewegen zu können.

## Revendications

1. Dispositif générateur de tourbillons dans un courant de fluide canalisé, le dispositif comprenant un conduit (11, 12) de fluide destiné à la circulation d'un courant de fluide, un dispositif (13) générateur de tourbillons, placé dans le conduit (11, 12) à l'intérieur du courant de fluide, et un dispositif de réglage destiné à faire varier l'aire de la section transversale du courant du fluide au voisinage du dispositif générateur, caractérisé en ce que le dispositif générateur comporte un organe allongé sous forme d'une plaque de section elliptique monté rotatif autour d'un axe (14) perpendiculaire à la section du courant de fluide.

2. Dispositif selon la revendication 1, dans lequel le dispositif de réglage comporte un capteur générateur d'un signal de commande destiné à faire varier la section du courant de fluide au voisinage de l'organe en forme de plaque, et un organe de manoeuvre couplé au capteur et à l'organe sous forme d'une plaque allongée afin qu'il déplace cet organe en fonction du signal de sortie du capteur.

FIG. 1.